# FASCICULE DE BREVET EUROPEEN

(11) **EP 2 678 211 B1**
(45) Date de publication et mention de la délivrance du brevet: **18.11.2015**
(21) Numéro de dépôt: 12709919.0
(22) Date de dépôt: 16.02.2012
(51) Int. Cl.: B62D 1/16, B62D 25/08

(54) **ASSEMBLAGE DE FIXATION D'UNE COLONNE DE DIRECTION DE VÉHICULE AUTOMOBILE**
ANORDNUNG ZUR ANBRINGUNG EINER LENKSÄULE FÜR EIN MOTORFAHRZEUG
ASSEMBLY FOR ATTACHING A STEERING COLUMN FOR A MOTOR VEHICLE

(30) Priorité: 21.02.2011 FR 1151384
(43) Date de publication de la demande: 01.01.2014
(73) Titulaire: Renault S.A.S., 92100 Boulogne-Billancourt (FR)
(72) Inventeur: LE JAOUEN, Guillaume, F-78180 Montigny le Bretonneux (FR); SAADI, Rabih, F-91300 Massy (FR)
(86) Numéro de dépôt international: PCT/FR2012/050336
(87) Numéro de publication internationale: WO 2012/114019

(56) Documents cités:
- FR-A1- 2 928 897
- US-A1- 2002 024 236
- US-B1- 6 450 533

## Description

L'invention porte sur un assemblage de fixation d'une colonne de direction de véhicule automobile.

Les éléments de direction d'un véhicule automobile que sont la colonne de direction et le volant sont habituellement supportés côté conducteur, à l'intérieur de l'habitacle, par l'intermédiaire notamment d'une barre transversale, ou traverse de tablier, disposée entre deux pieds supportant quant à eux le pare-brise ou encore les charnières de portes avant, les pieds avant, ou brancards, se prolongeant en montants de baie pour le pare-brise.

Habituellement, un tube relie les pieds avant et un support est assemblé au plus près des fixations de la colonne de direction. L'objectif d'un tel agencement est de diminuer tout porte à faux qui se révèle être très défavorable en cas de choc et néfaste au niveau du confort, c'est-à-dire générant des vibrations.

Le document FR 2928897 décrit un ensemble de traverse suivant le préambule de la revendication 1.

Les solutions de l'art antérieur sont incompatibles avec une nouvelle architecture de poste de conduite en raison de l'implantation de nombreux éléments, tels que des bacs vide-poche, un support de frein à main ou encore divers boîtiers électroniques de part et d'autre de la colonne de direction. Cette nouvelle architecture de poste de conduite est notamment destinée à équiper certains véhicules automobiles notamment de type monoplace, biplace ou trois places, dont l'architecture du châssis est spécifique.

Dans une telle architecture spécifique de châssis, d'une part, les équivalents des pieds avant d'un véhicule classique ne montent pas à la hauteur des fixations de la colonne de direction pour des raisons liées au choc et au gain de masse engendré. D'autre part, comme évoqué précédemment, il n'est pas envisageable, comme habituellement, qu'un tube traverse transversalement la planche de bord en raison de l'implantation de nombreux éléments tels que des bacs vide-poche, un support de frein à main ou encore divers boîtiers électroniques. En effet, les bacs vide-poches sur ce type de véhicule sont placés, de préférence, de part et d'autre du support de la colonne de direction dans le sens transversal, à une hauteur proche de ce même support. Un dispositif de frein à main est disposé à côté de la colonne de direction à une hauteur sensiblement égale, alors que des boîtiers électroniques viennent se loger dans des cavités prévues à cet effet, non loin du support de colonne de direction.

L'une des difficultés réside également dans le fait de permettre un déplacement du volant sensiblement suivant l'axe longitudinal et suivant l'axe vertical afin de garantir un déploiement correct de l'airbag en cas de choc frontal. De plus, les déplacements du volant sensiblement selon les axes longitudinal et vertical doivent être autorisés et munis de moyens de blocage pour assurer éventuellement un réglage en fonction de la morphologie du conducteur.

L'objectif est également d'utiliser une platine de colonne de direction pouvant également être utilisée sur un autre véhicule.

La présente invention a pour but de fournir un assemblage de fixation d'une colonne de direction de véhicule automobile remédiant aux problèmes exposés précédemment et améliorant les assemblages connus de l'art antérieur. En particulier, l'invention se rapporte à un assemblage de fixation de colonne de direction, compatible avec une architecture de caisse spécifique de véhicule automobile, apte à recevoir une planche de bord comportant des équipements de part et d'autre de la colonne de direction, comme des vide-poches, des éléments électroniques ou un frein à main.

Selon l'invention, l'assemblage permet de fixer une colonne de direction de véhicule automobile destiné à être fixé d'une part à une traverse de tablier et d'autre part à une traverse inférieure de baie. Il comprend un organe de support s'étendant sensiblement verticalement, destiné à être fixé à la traverse de tablier et à la traverse inférieure de baie, et supportant un moyen de fixation d'une platine de la colonne de direction.

L'organe de support peut comprendre deux montants destinés à être fixés de part et d'autre de la traverse de tablier dans le sens longitudinal.

L'organe de support peut comprendre quatre montants destinés à être fixés deux à deux de part et d'autre de la traverse de tablier dans le sens longitudinal.

Le moyen de fixation peut comprendre un élément transversal fixé sur deux montants destinés à être fixés du même côté de la traverse de tablier dans le sens longitudinal.

Le moyen de fixation peut comprendre un élément longitudinal fixé sur deux montants destinés à être fixés de part et d'autre de la traverse de tablier.

Le moyen de fixation peut comprendre un élément longitudinal fixé sur un élément transversal.

L'organe de support peut comprendre une platine destinée à être fixée sur la traverse inférieure de baie.

Selon l'invention, la structure de caisse de véhicule automobile comprend un assemblage de fixation d'une colonne de direction défini précédemment, une traverse de tablier et une traverse inférieure de baie étant solidaires de brancards avant supportant un pare-brise.

Selon l'invention, le véhicule automobile comprend un assemblage de fixation d'une colonne de direction défini précédemment ou une structure de caisse définie précédemment.

D'autres caractéristiques et avantages de l'invention apparaîtront à la lecture de la description d'un mode de réalisation qui va maintenant être fait en se référant aux dessins annexés, sur lesquels :
- la figure 1 représente une planche de bord comportant un mode de réalisation d'un assemblage de fixation de colonne de direction selon l'invention ;
- la figure 2 représente une vue en perspective du mode de réalisation de l'assemblage de fixation de colonne de direction selon l'invention fixé à une caisse de véhicule automobile ;
- la figure 3 représente une vue en perspective d'un organe de support 1 selon l'invention.

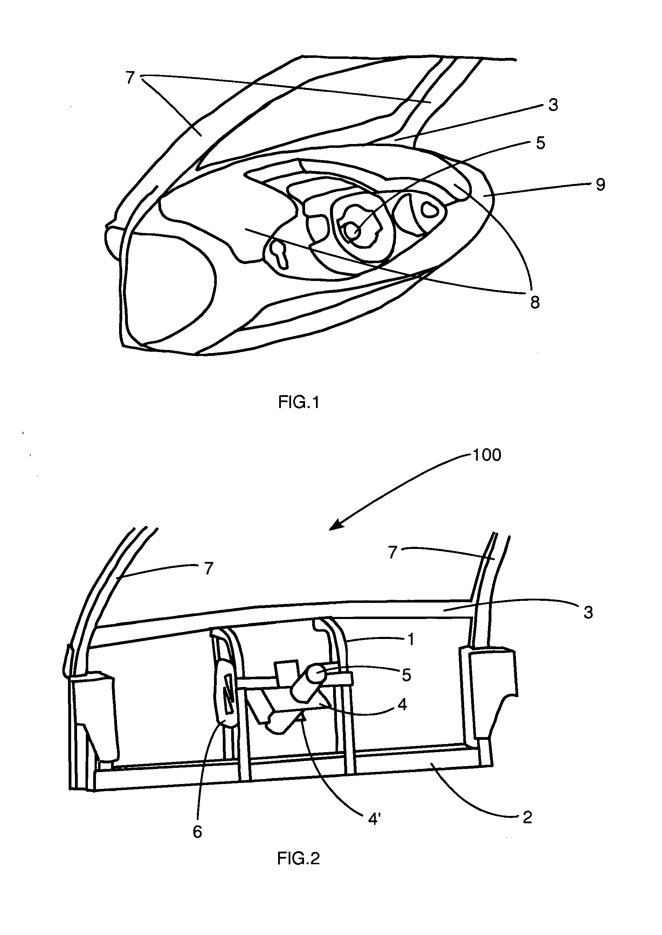

Un mode de réalisation d'un assemblage 100 de fixation d'une colonne de direction d'un véhicule automobile est décrit ci-après en référence aux figures 1 à 3.

L'assemblage de fixation est destiné à être fixé à une structure pour constituer avec celle-ci une caisse de véhicule automobile. Notamment, l'assemblage est destiné à être fixé à une traverse inférieure de baie 3 et à une traverse supérieure de face avant 2. L'assemblage 100 de fixation de direction 5 a pour fonction d'assurer une fixation robuste de la colonne de direction 5 sur une caisse de véhicule automobile. La traverse de tablier ou traverse de face avant est une traverse essentielle de la structure du châssis sur laquelle peuvent venir se fixer des éléments additionnels et sur laquelle sont fixées d'autres barres de la structure du châssis. La traverse inférieure de baie 3 est la traverse sur laquelle vient se fixer le pare-brise en partie basse.

L'assemblage 100 de fixation de colonne de direction 5 comprend un organe de support 1 s'étendant sensiblement verticalement et un moyen de fixation 15, 15', 14 de la colonne de direction 5, notamment d'une platine de colonne de direction.

L'organe de support 1 est destiné à être fixé d'une part à la traverse inférieure de baie 3 et d'autre part à la traverse supérieure de face avant, ou traverse de tablier 2. L'organe de support 1 permet de supporter le moyen de fixation 15, 15', 14 de la colonne de direction 5.

Sur les figures 1 et 2, l'assemblage de fixation est monté sur une structure pour constituer une caisse. L'organe de support 1 est donc fixé d'une part à la traverse inférieure de baie 3 et d'autre part à la traverse de tablier 2.

Par ailleurs, cette caisse comprend des brancards 7 supportant un pare-brise, ces brancards étant liés à la traverse inférieure de baie 3 et à la traverse de tablier 2. Cette caisse permet de recevoir une planche de bord 9 présentant un passage de colonne de direction. Comme représenté plus particulièrement sur la figure 2, cette caisse ne comporte pas de traverse de planche de bord comme habituellement pour des véhicules classiques, mais cette planche de bord est placée sensiblement entre la traverse inférieure de baie 3 et la traverse de tablier 2. La planche de bord 9 comprend par exemple un ou plusieurs bacs vide-poches 8, par exemple deux, de part et d'autre de la colonne de direction 5.

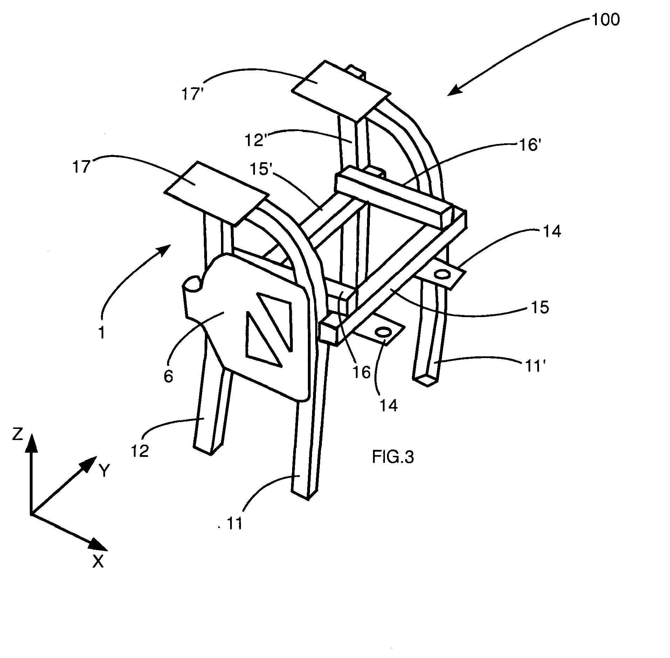

Sur les figures, la direction longitudinale est représentée par un axe X, la direction transversale est représentée par un axe Y et la direction verticale par un axe Z (figure 3).

De préférence, l'organe de support 1 comprend quatre montants 11, 12, 11', 12', s'étendant sensiblement verticalement. Ces montants sont destinés à être fixés deux à deux de part et d'autre de la traverse de tablier 2 selon l'axe longitudinal, par tout moyen de fixation par exemple par vis, boulons, rivets ou par soudure. Ainsi, le montant 12 est fixé à l'avant de la traverse de tablier et le montant 11 est fixé à l'arrière de la traverse de tablier. De même, le montant 12' est fixé à l'avant de la traverse de tablier et le montant 11' est fixé à l'arrière de la traverse de tablier. En cas de cordons de soudure, les cordons pourront être verticaux et au nombre de deux par montant. L'intérêt d'un organe de support 1 à quatre montants 11, 12, 11', 12' ainsi fixé sur la traverse de tablier 2 est de garantir une grande stabilité de la colonne de direction 5 en reprenant les moments autour des axes X, Y et Z.

Les extrémités supérieures des montants 11 et 11' sont de préférence courbés vers l'avant du véhicule et viennent se solidariser respectivement avec les extrémités des montants 12 et 12' par tout moyen de fixation par exemple par vis, boulons, rivets ou par soudure. La fixation de l'organe de support à la traverse inférieure de baie se fait au niveau de ces extrémités, de préférence, par l'intermédiaire de platines 17 et 17' prévues pour faciliter la fixation de l'organe de support 1 sur la traverse inférieure de baie 3, notamment via des vis, boulons, rivets ou par soudure.

Le moyen de fixation de la colonne de direction 5 peut comprendre au moins un élément transversal 15, 15' fixé à l'organe de support, notamment deux éléments transversaux 15, 15' s'étendant transversalement respectivement entre les deux montants 11 et 11' et entre les deux montants 12, 12'. L'élément transversal ou les éléments transversaux 15, 15' sont destinés à recevoir la colonne de direction, notamment une platine 4, 4' de la colonne de direction 5. A cette fin, les éléments transversaux 15 et 15' permettent d'intégrer des goussets de fixations 14 disposés dans un plan sensiblement horizontal, de préférence au nombre de quatre, à savoir deux sur l'élément transversal 15 et deux sur l'élément transversal 15'. Ces goussets de fixation 14 reçoivent la ou les platines 4, 4' traversées par la colonne de direction 5 et fixées à celle-ci. Ces goussets font partie du moyen de fixation.

Les montants 11 et 12 ou 11' et 12' peuvent recevoir un support de frein à main 6.

Le moyen de fixation peut comprendre au moins un élément longitudinal 16, 16' fixé respectivement sur deux montants 11 et 12 et 11' et 12'. Le moyen de fixation peut comprendre au moins un élément longitudinal 16, 16' fixé sur au moins un élément transversal 15, 15'. Le moyen de fixation peut comprendre des éléments longitudinaux 16, 16' fixés à la fois sur les éléments transversaux 15, 15' et respectivement sur deux montants 11 et 12 et 11' et 12'. L'assemblage se fait par vis, boulons, rivets et de préférence par soudure. Là encore, l'objectif d'un tel agencement est de gagner en rigidité.

Les montants 11 et 12, ou les montants 11' et 12', permettent notamment de maintenir un support de frein à main 6, qui a par exemple une forme de plaque ajourée placée dans un plan sensiblement vertical et longitudinal.

Les montants 11 et 11' et 12 et 12' peuvent être de section carrée, ronde, rectangulaire ou autre. Ils sont par exemple symétriques ou sensiblement symétriques par rapport à un plan vertical longitudinal passant par exemple par le milieu du véhicule.

En résumé, la structure de l'assemblage 100 s'apparente à la structure d'une chaise qui assure une stabilité pour la flexion autour de l'axe transversal, en cas de choc frontal, et flexion de la colonne de direction 5.

Par exemple, l'organe de support 1 est réalisé à partir de tôle d'acier d'épaisseur 1,2mm, notamment de tôle d'acier d'épaisseur 1,2mm et/ou de type TSE220 +CR2 (norme EN 10305-5).

L'organe de support 1 peut être obtenu par une ou plusieurs pièces embouties, moulées ou issues de découpe de tôles, d'épaisseurs identiques ou non. Le nombre de pièce constituant l'organe 1 peut être diminué.

Dans un second mode de réalisation, l'organe de support 1 comprend une unique pièce s'étendant sensiblement selon l'axe vertical, pourvue de moyens de liaison à la traverse inférieure de baie 3, de moyens de liaison à la traverse de tablier 2 et d'un moyen de liaison au moyen de fixation à une platine 4, 4' de la colonne de direction 5. Il comprend également avantageusement un support de frein à main 6.

Dans un troisième mode de réalisation, l'organe de support 1 comprend deux montants 11, 12, chacun étant destiné à être fixé de part et d'autre de la traverse de tablier 2 selon l'axe longitudinal, par tout moyen, par exemple par vis, boulons, rivets ou soudure. L'avantage d'un organe de support 1 à deux montants 11, 12 ainsi fixé est de garantir une stabilité à la colonne de direction 5. L'organe de support 1 peut alors supporter le moyen de fixation de la colonne de direction 5 et un support de frein à main 6.

L'invention peut convenir particulièrement à un véhicule de type monoplace voire biplace ou trois places (avec deux places arrière et une place conducteur), la place ou les places passager étant par exemple situées derrière la place conducteur.

Les deux fixations sur la traverse inférieure de baie via les platines contribuent sensiblement à l'encastrement de la structure.

L'invention comporte de nombreux avantages, tels que :
- fournir une fixation robuste de la colonne de direction 5 d'un véhicule automobile, sans traverse de planche de bord classique,
- assurer la réception d'un ensemble comprenant une platine support de colonne 4, 4' ainsi qu'une colonne 5 provenant de modèles de véhicules déjà fabriqués, diminuant les frais d'industrialisation de la solution,
- permettre l'implantation d'un support de frein à main 6 sur l'un des côtés de l'assemblage 100 de fixation de la colonne de direction 5 c'est-à-dire non situé sur le plancher du véhicule comme habituellement,
- permettre l'implantation de bacs vide-poche 8, par exemple de part et d'autre de l'organe de support 1,
- permettre l'insertion d'éléments électroniques dans le corps de la planche de bord.

Ce type d'invention peut aussi être utilisé pour des véhicules automobiles s'inclinant dans les virages à l'instar de certains véhicules équipés de deux roues à l'avant et d'une seule roue à l'arrière.

L'invention permet d'assurer une fixation robuste d'une colonne de direction sur la caisse d'un véhicule automobile afin d'assurer un niveau acceptable de confort vibratoire au conducteur lors du fonctionnement du véhicule.

## Revendications

1. Assemblage (100) de fixation d'une colonne de direction (5) de véhicule automobile destiné à être fixé d'une part à une traverse de tablier (2) et d'autre part à une traverse inférieure de baie (3), **caractérisé en ce qu'**il comprend au moins un organe de support (1) s'étendant sensiblement verticalement, destiné à être fixé à la traverse de tablier (2) et à la traverse inférieure de baie (3), et supportant un moyen de fixation (15, 15', 14) d'une platine (4, 4') de la colonne de direction (5).

2. Assemblage (100) de fixation d'une colonne de direction (5) de véhicule automobile selon la revendication 1, **caractérisé en ce que** l'organe de support (1) comprend deux montants (11, 12), destinés à être fixés de part et d'autre de la traverse de tablier (2) dans le sens longitudinal.

3. Assemblage (100) de fixation d'une colonne de direction (5) de véhicule automobile selon la revendication 1, **caractérisé en ce que** l'organe de support (1) comprend quatre montants (11, 12, 11', 12') destinés à être fixés deux à deux de part et d'autre de la traverse de tablier (2) dans le sens longitudinal.

4. Assemblage (100) de fixation d'une colonne de direction (5) de véhicule automobile selon la revendication 3, **caractérisé en ce que** le moyen de fixation comprend un élément transversal (15, 15') fixé sur deux montants (11, 11' ; 12, 12') destinés à être fixés du même côté de la traverse de tablier dans le sens longitudinal.

5. Assemblage (100) de fixation d'une colonne de direction (5) de véhicule automobile selon la revendication 4, **caractérisé en ce que** le moyen de fixation comprend un élément longitudinal (16, 16') fixé sur deux montants (11, 12 ; 11', 12') destinés à être fixés de part et d'autre de la traverse de tablier (2).

6. Assemblage (100) de fixation d'une colonne de direction (5) de véhicule automobile selon la revendication 5, **caractérisé en ce que** le moyen de fixation comprend un élément longitudinal (16, 16') fixé sur un élément transversal (15,15').

7. Assemblage (100) de fixation d'une colonne de direction (5) de véhicule automobile selon l'une des revendications précédentes, **caractérisé en ce que** l'organe de support (1) comprend une platine (17,17') destinée à être fixée sur la traverse inférieure (3) de baie.

8. Structure de caisse de véhicule automobile **caractérisée en ce qu'**elle comprend un assemblage (100) de fixation d'une colonne de direction (5) selon l'une des revendications précédentes, une traverse de tablier (2) et une traverse inférieure de baie (3) étant solidaires de brancards (7) avant supportant un pare-brise.

9. Véhicule automobile **caractérisé en ce qu'**il comprend un assemblage (100) de fixation d'une colonne de direction (5) selon l'une des revendications 1 à 7 ou une structure de caisse selon la revendication 8.

## Patentansprüche

1. Anordnung (100) zur Anbringung einer Lenksäule (5) für ein Motorfahrzeug, die dazu bestimmt ist, einerseits an einem Schürzenquerbalken (2) und andererseits an einem unteren Öffnungsquerbalken (3) befestigt zu werden, **dadurch gekennzeichnet, dass** sie mindestens ein Tragorgan (1) umfasst, das sich im Wesentlichen vertikal erstreckt, das dazu bestimmt ist, an dem Schürzenquerbalken (2) und an dem unteren Öffnungsquerbalken (3) befestigt zu werden und ein Befestigungsmittel (15, 15', 14) einer Platte (4, 4') der Lenksäule (5) trägt.

2. Anordnung (100) zur Anbringung einer Lenksäule (5) für ein Motorfahrzeug nach Anspruch 1, **dadurch gekennzeichnet, dass** das Tragorgan (1) zwei Ständer (11, 12) umfasst, die dazu bestimmt sind, zu beiden Seiten des Schürzenquerbalkens (2) in die Längsrichtung befestigt zu werden.

3. Anordnung (100) zur Anbringung einer Lenksäule (5) für ein Motorfahrzeug nach Anspruch 1, **dadurch gekennzeichnet, dass** das Tragorgan (1) vier Ständer (11, 12, 11', 12') umfasst, die dazu bestimmt sind, zu je zwei auf jeder Seite des Schürzenquerbalkens (2) in die Längsrichtung befestigt zu werden.

4. Anordnung (100) zur Anbringung einer Lenksäule (5) für ein Motorfahrzeug nach Anspruch 3, **dadurch gekennzeichnet, dass** das Befestigungsmittel ein Querelement (15, 15') umfasst, das auf zwei Ständern (11, 11'; 12, 12'), die dazu bestimmt sind, auf derselben Seite des Schürzenquerbalkens in die Längsrichtung befestigt zu werden, befestigt ist.

5. Anordnung (100) zur Anbringung einer Lenksäule (5) für ein Motorfahrzeug nach Anspruch 4, **dadurch gekennzeichnet, dass** das Befestigungsmittel ein Längselement (16, 16') umfasst, das auf zwei Ständern (11, 12; 11', 12') befestigt ist, die dazu bestimmt sind, auf beiden Seiten des Schürzenquerbalkens (2) befestigt zu werden.

6. Anordnung (100) zur Anbringung einer Lenksäule (5) für ein Motorfahrzeug nach Anspruch 5, **dadurch gekennzeichnet, dass** das Befestigungsmittel ein Längselement (16, 16'), das auf einem Querelement (15, 15') befestigt ist, umfasst.

7. Anordnung (100) zur Anbringung einer Lenksäule (5) für ein Motorfahrzeug nach einem der vorhergehenden Ansprüche, **dadurch gekennzeichnet, dass** das Tragorgan (1) eine Platte (17, 17'), die dazu bestimmt ist, auf dem unteren Öffnungsquerbalken (3) befestigt zu werden, umfasst.

8. Motorfahrzeugkarosseriestruktur, **dadurch gekennzeichnet, dass** sie eine Anordnung (100) zur Anbringung einer Lenksäule (5) nach einem der vorhergehenden Ansprüche umfasst, wobei ein Schürzenquerbalken (2) und ein unterer Öffnungsquerbalken (3) fest an vorderen Längsträgern (7), die eine Windschutzscheibe tragen, verbunden sind.

9. Motorfahrzeug, **dadurch gekennzeichnet, dass** es eine Anordnung (100) zur Anbringung einer Lenksäule (5) nach einem der Ansprüche 1 bis 7 oder eine Karosseriestruktur nach Anspruch 8 umfasst.

## Claims

1. Assembly (100) for attaching a motor vehicle steering column (5), which assembly is intended to be fixed firstly to a bulkhead crossmember (2) and secondly to a windscreen opening lower crossmember (3), **characterized in that** it comprises at least one support member (1) extending substantially vertically, intended to be fixed to the bulkhead crossmember (2) and to the windscreen opening lower crossmember (3) and supporting a means of attachment (15, 15', 14) of a mounting plate (4, 4') for the steering column (5).

2. Assembly (100) for attaching a motor vehicle steering column (5) according to Claim 1, **characterized in that** the support member (1) comprises two uprights (11, 12) which are intended to be fixed one on each side of the bulkhead crossmember (2) in the longitudinal direction.

3. Assembly (100) for attaching a motor vehicle steering column (5) according to Claim 1, **characterized in that** the support member (1) comprises four uprights (11, 12, 11', 12') which are intended to be fixed in pairs on each side of the bulkhead crossmember (2) in the longitudinal direction.

4. Assembly (100) for attaching a motor vehicle steering column (5) according to Claim 3, **characterized in that** the attachment means comprises a transverse element (15, 15') which is fixed to two uprights (11, 11'; 12, 12') which are intended to be fixed on the same side of the bulkhead crossmember in the longitudinal direction.

5. Assembly (100) for attaching a motor vehicle steering column (5) according to Claim 4, **characterized in that** the attachment means comprises a longitudinal element (16, 16') which is fixed to two uprights (11, 12; 11', 12') which are intended to be fixed on each side of the bulkhead crossmember (2).

6. Assembly (100) for attaching a motor vehicle steering column (5) according to Claim 5, **characterized in that** the attachment means comprises a longitudinal element (16, 16') fixed to a transverse element (15, 15').

7. Assembly (100) for attaching a motor vehicle steering column (5) according to one of the preceding claims, **characterized in that** the support member (1) comprises a mounting plate (17, 17') intended to be fixed to the windscreen opening lower crossmember (3).

8. Motor vehicle body structure, **characterized in that** it comprises an assembly (100) for attaching a steering column (5) according to one of the preceding claims, a bulkhead crossmember (2) and a windscreen opening lower crossmember (3) being secured to A-posts (7) supporting a windscreen.

9. Motor vehicle, **characterized in that** it comprises an assembly (100) for attaching a steering column (5) according to one of Claims 1 to 7 or a body structure according to Claim 8.
